# EUROPÄISCHE PATENTSCHRIFT

(11) **EP 2 234 801 B1**
(45) Veröffentlichungstag und Bekanntmachung des Hinweises auf die Patenterteilung: **11.05.2011**
(21) Anmeldenummer: 08871433.2
(22) Anmeldetag: 18.12.2008
(51) Int. Cl.: B32B 1/08, B32B 25/02, B32B 25/10, F01P 11/04, F16L 11/08, B29C 47/02

(54) **VERSTÄRKTER SCHLAUCH**
REINFORCED HOSE
TUYAU SOUPLE ARMÉ

(30) Priorität: 23.01.2008 WO PCT/EP2008/000481; 19.08.2008 EP 08162622
(43) Veröffentlichungstag der Anmeldung: 06.10.2010
(73) Patentinhaber: Polyamide High Performance GmbH, 42103 Wuppertal (DE)
(72) Erfinder: FLACHENECKER, Andreas, 45276 Essen (DE)
(74) Vertreter: Oberlein, Gerriet H. R.
(86) Internationale Anmeldenummer: PCT/EP2008/067835
(87) Internationale Veröffentlichungsnummer: WO 2009/092502

(56) Entgegenhaltungen:
- DE-A1- 2 063 641
- DE-A1- 10 140 774
- US-A- 5 372 163

## Beschreibung

### Beschreibung:

Die Erfindung betrifft Schläuche aus einem elastomeren Material mit einer textilen Verstärkung und befasst sich insbesondere mit einer textilen Verstärkung auf Basis von Polyamidfasern.

Solche Schläuche sind besonders für den Einsatz in Kühlsystemen geeignet. In modernen wasser- oder flüssigkeitsgekühlten Fahrzeugmotoren besitzen Kühlsysteme verstärkte Schläuche aus flexiblen Materialien, durch die Flüssigkeiten sowohl zu als auch von dem Kühler zirkulieren.

Dokument DE 2 063 641 offenbart einen verstärkten Schlauch, der vorzugsweise durch eine einzige Schicht aus einem behandelten Polyester- oder Nylongewebe verstärkt ist.

Heute werden auch Aramidfasern für diese Anwendung eingesetzt. Schlauchverstärkungen aus Polyesterfaserm oder aus Aramidfasern besitzen allerdings nur eine geringe Beständigkeit gegen Hydrolyse bei erhöhten Kühlmittelbetriebstemperaturen.

Eine gute Hydrolysebeständigkeit der textilen Verstärkung ist allerdings eine Voraussetzung zur Herstellung relativ dünnwandiger Schläuche, da Wasser bei solchen Schläuchen leichter bis zum Verstärkungsmaterial diffundieren und die Stabilität der Verstärkung herabsetzen kann.

Schläuche mit einer textilen Verstärkung auf Basis von Fasern aus aliphatischem Polyamid bieten gegenüber Aramid oder Polyester eine bessere Beständigkeit gegen Hydrolyse. Diese Schläuche mit einer textilen Verstärkung auf Basis von Fasern aus aliphatischem Polyamid weisen aber eine unruhige bzw. ungleichmäßige Oberfläche auf.

Zur Gruppe der aliphatische Polyamide gehören beispielsweise solche Polymere, die dem Fachmann unter der Bezeichnung Nylon bekannt sind, darunter fallen insbesondere Polyamid 6, Polyamid 6.6 oder auch Polyamid 4.6.

Aufgabe der vorliegenden Erfindung ist es daher, einen Schlauch mit einer textilen Verstärkung zur Verfügung zu stellen, bei dem die Nachteile des Standes der Technik zumindest verringert sind. Insbesondere soll der Schlauch eine gute Hydrolysebeständigkeit und gleichzeitig eine glattere, gleichmäßigere Oberfläche aufweisen.

Diese Aufgabe wird gelöst durch einen Schlauch, umfassend ein elastomeres Material und eine textile Verstärkung, wobei die textile Verstärkung im wesentlichen aus Fasern besteht, ausgewählt aus der Gruppe der aliphatischen Polyamide, dadurch gekennzeichnet, dass der Heißluftschrumpf der eingesetzten Fasern, bestimmt nach DIN 53866 bei 180°C, 2 min und einer Vorspannung von 5 mN/tex, kleiner als 2,5 % ist.

Der Begriff Faser umfasst linienförmige Gebilde aus einem oder mehreren Filamenten, wobei die Filamente als Endlosfilamente oder als Stapelfasern vorliegen können. Linienförmige Gebilde aus mehreren Endlosfilamenten werden auch als Multifilamentgarne und linienförmige Gebilde aus einem Endlosfilament als Monofilamentgarne bezeichnet.

Unter textilen Verstärkungen, die im wesentlichen aus Fasern, ausgewählt aus der Gruppe der aliphatischen Polyamide, bestehen, sind solche textilen Verstärkungen zu verstehen, die zumindest überwiegend aus Fasern, ausgewählt aus der Gruppe der aliphatischen Polyamide, bestehen. Bevorzugt besteht die textile Verstärkung zu mindestens 60 Gew.-% aus Fasern, ausgewählt aus der Gruppe der aliphatischen Polyamide. Des weiteren sind solche textilen Verstärkungen bevorzugt, die zu mindestens 70 Gew.-%, zu mindestens 80 Gew.-% und besonders bevorzugt zu mindestens 90 Gew.-% aus Fasern, ausgewählt aus der Gruppe der aliphatischen Polyamide, bestehen. Natürlich kann die textile Verstärkung auch zu 100 Gew.-% aus Fasern, ausgewählt aus der Gruppe der aliphatischen Polyamide, bestehen.

Die Gruppe der elastomeren Materialien umfasst synthetische und natürliche Polymere, die sich dadurch auszeichnen, dass sie sich bereits bei geringer Kraftwirkung dehnen und biegen lassen und ohne Krafteinwirkung wieder zurückstellen, also ihre ursprüngliche Form einnehmen. Ein geeignetes elastomeres Material für einen verstärkten Schlauch gemäß der vorliegenden Erfindung ist Gummi. Als Werkstoff Gummi im Sinne der Erfindung ist natürlicher oder synthetischer Kautschuk, welcher vulkanisiert ist, zu verstehen. Synthetischer Kautschuk besteht meist aus Styrol und Butadien; andere Rohstoffbasen sind Styrolacrylat, Reinacrylat, Vinylacetat. Beispiele für geeignete elastomere Materialien sind Styrol-Butadien-Kautschuk, Neopren, EPDM (Ethylen-Propylen-Dien-Kautschuk), Ethylen-Propylen-Terpolymer-Kautschuk, Nitrilbutadien-Kautschuk oder hydrierter Nitrilbutadien-Kautschuk.

Bei der Herstellung der erfindungsgemäßen Schläuche wird ein Einschneiden der Faser in das innere Schlauchrohr und die Bildung einer unruhigen, orangenhautartigen Oberfläche des äußeren Schlauchrohrs deutlich reduziert.

Während dieses mit ausgewählten Polyester- oder Aramidgarnen erreicht werden kann, ist dies selbst mit üblichen niedrigschrumpfenden Nylongarnen nicht machbar. Die dem Fachmann bekannten niedrigschrumpfenden Nylongarne, insbesondere Nylon 6.6 Multifilamentgarne weisen einen Heißluftschrumpf von mindestens 2,5% bis ca. 3,5% auf, gemessen nach DIN 53866 bei 180°C, 2min und 5 mN/tex Vorspannung. Mit solchen niedrigschrumpfenden Garnen ist die Bildung einer unruhigen, orangenhautartigen Oberfläche des äußeren des Schlauchrohrs nicht zu vermeiden. Die Fasern der textilen Verstärkung des erfindungsgemäßen Schlauches weisen die geforderten Eigenschaften bereits vor der Schlauchherstellung, d.h. vor der Vulkanisation auf.

Bei dem Schlauch gemäß der vorliegenden Erfindung weisen die Fasern der textilen Verstärkung, die im wesentlichen aus aliphatischen Polyamiden bestehen, bevorzugt einen Heißluftschrumpf, bestimmt nach DIN 53866 bei 180°C, 2 min und einer Vorspannung von 5 mN/tex, auf, der kleiner als 2,3 % ist.

Besonders bevorzugt weisen die Fasern ausgewählt aus der Gruppe der aliphatischen Polyamide einen Heißluftschrumpf, bestimmt nach DIN 53866 bei 180°C, 2 min und einer Vorspannung von 5 mN/tex, auf, der kleiner als 2,1 % ist.

Die aliphatischen Polyamide, aus denen die Fasern der textilen Verstärkung im wesentlichen bestehen, sind bevorzugt Polyamid 6, Polyamid 6.6, Polyamid 4.6 oder Mischungen dieser Polymere.

Die Fasern der textilen Verstärkung liegen bevorzugt als Multifilamentgarn vor. Der Titerbereich der Multifilamentgarne liegt bevorzugt zwischen 350 dtex und 2500 dtex, besonders bevorzugt zwischen 700 dtex und 2100 dtex. Die Filamentzahl des Multifilamentgarnes liegt bevorzugt zwischen 70 und 280 Filamenten.

Es können auch Konstruktionen aus mehreren Multifilamentgarnen, bevorzugt aus 1 bis 3 Multifilamentgarnen, mit einem Gesamttiter von bis zu 3000 dtex verwendet werden, wie zum Beispiel 940 dtex x 3, 700 dtex x 3, 940 dtex x 2, 1880 x 1, 2100 x 1 und 1400 x 1. Diese Gamkonstruktionen können mit Drehungen zwischen 40 und 200 Drehungen pro Meter versehen werden. Dadurch wird nicht nur der Zusammenhalt der Garne, sondern auch die Ermüdungsbeständigkeit erhöht.

Die Herstellung der Garne für die textile Verstärkung erfolgt beispielsweise durch Spinnen des erhitzten und geschmolzenen Polymermaterials.

Das Gespinst kann anschließend mit Avivage benetzt und geeignet verstreckt werden, so dass zwischenzeitlich Garnfestigkeiten von 660 mN/tex bis 970 mN/tex und Bruchdehnungen von 16% bis 28% erreicht werden. Die so verstreckten Garne werden dann durch den anschließenden Einfluss von Wärme und ggf. Feuchte relaxiert.

Der Feuchtebereich beträgt dabei 60-100% in heißem Wasserdampf. Alternativ können die Garne auch vollständig von heißem Wasser benetzt sein.

Bei der Behandlung mit heißem Wasser wird das Garn bevorzugt beginnend mit 70°C heißem Wasser in einem Reaktor umströmt. Das Wasser wird dann stetig auf eine Endtemperatur von 80°C bis 140°C aufgeheizt (Aufheizrate 1°C/min) und dort für 10 bis 40 min gehalten. Anschließend wird das Garn durch Spülen mit raumtemperaturkaltem Wasser abgekühlt und getrocknet.

Bei der Behandlung mit Dampf wird das Garn durch Behälter geleitet, die bei Umgebungsdruck mit Dampf gefüllt sind. Die Dampftemperatur liegt bevorzugt zwischen 240 und 285°C. Der heiße Dampf löst den Schrumpf aus. Nach der Dampfbehandlung wird das Garn dann in Umgebungsluft wieder aufgewickelt. Durch diese bevorzugte Behandlungen wird erreicht, dass der Heißluftschrumpf, bestimmt nach DIN 53866 bei 180°C, 2 min und einer Vorspannung von 5 mN/tex zwischen 1,3 % und 2,5 % , vorzugsweise zwischen 1,3 % und 2,3 % liegt.

Anstelle einer Verstreckung des Gespinstes und anschließender Behandlung mit heißem Wasser oder Dampf kann das Gespinst nach dem Spinnen auch direkt einer Behandlung mit Dampf und gleichzeitiger Verstreckung unterzogen werden. Nach anschließender Relaxierung wird der geforderte Heißluftschrumpf, bestimmt nach DIN 53866 bei 180°C, 2 min und einer Vorspannung von 5 mN/tex zwischen 1,3% und 2,5 % erreicht.

Die Fasern der textilen Verstärkung können ebenfalls in Form von Korden vorliegen.

In einer weiteren bevorzugten Ausführungsform des erfindungsgemäßen Schlauches liegt die textile Verstärkung in einer einzigen Schicht, eingebettet in dem elastomeren Material, vor. Die textile Verstärkung liegt in diesem Fall zwischen einer inneren Schicht eines elastomeren Materials und einer äußeren Schicht eines elastomeren Materials vor, d.h. der erfindungsgemäße Schlauch weist in dieser bevorzugten Ausführungsform ein inneres Rohr aus einem elastomeren Material auf, über diesem inneren Rohr befindet sich die textile Verstärkung und über der textilen Verstärkung ein äußeres Rohr, das vorzugsweise aus dem gleichen elastomeren Material wie das innere Rohr besteht. Elastomeres Material liegt bevorzugt auch zwischen den Fasern der textilen Verstärkung vor.

Die Fasern der textilen Verstärkung können mit einem Haftungsverbesserer, beispielsweise mit einer organischen Polyisocyanatlösung, behandelt werden. Für den Fall, dass die Fasern der textilen Verstärkung mit einem Haftungsverbesserer behandelt werden, können die Fasern vor der Behandlung auch einen Heißluftschrumpf größer als 2,5 % aufweisen, unter der Voraussetzung, dass die Fasern nach der Behandlung mit dem Haftungsverbesserer den erfindungsgemäß geforderten Heißluftschrumpf kleiner 2,5% aufweisen. Bevorzugt weisen die Fasern der textilen Verstärkung bereits vor der Behandlung mit Haftungsverbesserern den erfindungsgemäß geforderten Heißluftschrumpf kleiner 2,5 % auf. Besonders bevorzugt ist der erfindungsgemäße Schlauch jedoch dadurch gekennzeichnet, dass die Fasern der textilen Verstärkung unbehandelt, d.h. frei von Haftungsverbessern sind.

Die textile Verstärkung kann in Form von Geflechten oder in Form von Fasern, die spiralförmig um das innere Schlauchrohr gewickelt sind, vorliegen. Bevorzugt liegt die textile Verstärkung in Form von Geweben, insbesondere Rundgewebe, Gewirken, insbesondere Rundgewirken oder in Form von Gestricken, insbesondere Rundgestricken vor.

Die textile Verstärkung sorgt für eine hohe Berstfestigkeit und reduziert eine merkliche Dehnung des Schlauches bei erhöhtem Druck. Gleichzeitig sorgt die textile Verstärkung dafür, dass der Schlauch einem Zusammenfallen bei Auftreten einen Vakuums zu widerstehen vermag.

Der Schlauch gemäß der vorliegenden Erfindung eignet sich besonders zur Handhabung heißer Flüssigkeiten, speziell wässriger Flüssigkeiten oder wässriger Lösungen. Die Erfindung ist daher besonders geeignet zur Verwendung als Kühlwasserschlauch. Ein Kühlwasserschlauch gemäß der vorliegenden Erfindung weist eine verbesserte Beständigkeit gegen Hydrolyse auf.

Die Erfindung umfasst ebenfalls ein Verfahren zur Herstellung eines Schlauches mit einer textilen Verstärkung. Dieses Verfahren umfasst die Schritte Extrusion eines Schlauches aus einem elastomeren Material, Aufbringen der textilen Verstärkung auf den äußeren Umfang des extrudierten Schlauches, wobei die textile Verstärkung im wesentlichen aus Fasern besteht, die aus der Gruppe der aliphatischen Polyamide ausgewählt sind, Extrusion eines Überzuges aus einem elastomeren Material auf die textile Verstärkung und anschließende Vulkanisation des erhaltenen Schlauches, dadurch gekennzeichnet, dass als textile Verstärkung Fasern mit einem Heißluftschrumpf kleiner als 2,5 %, bevorzugt kleiner 2,3 %, besonders bevorzugt kleiner 2,1 % ausgewählt werden, wobei der Heißluftschrumpf nach DIN 53866 bei 180°C, 2 min und einer Vorspannung von 5 mN/tex zu bestimmen ist.

Zum Vulkanisieren kann der Schlauch auf einen Härtungsdorn aufgesetzt werden, wodurch der resultierende Schlauch eine Form entsprechend der Form des Härtungsdornes annimmt. Die Vulkanisation kann beispielsweise in Sattdampf im Autoklaven erfolgen. Der fertige Schlauch weist bevorzugt einen gekrümmten Teil oder eine Biegung in seiner Länge auf.

In einer bevorzugten Ausführungsform des erfindungsgemäßen Verfahrens werden die Fasern der textilen Verstärkung nicht mit einem Haftungsverbesserer behandelt. Die Fasern der textilen Verstärkung sind daher bevorzugt frei von Haftungsverbessern.

## Patentansprüche

1. Schlauch, umfassend ein elastomeres Material und eine textile Verstärkung, wobei die textile Verstärkung im wesentlichen aus Fasern besteht ausgewählt aus der Gruppe der aliphatischen Polyamide, **dadurch gekennzeichnet, dass** der Heißluftschrumpf der eingesetzten Fasern, bestimmt nach DIN 53866 bei 180°C, 2 min und einer Vorspannung von 5 mN/tex, kleiner als 2,5 % ist.

2. Schlauch nach Anspruch 1, **dadurch gekennzeichnet, dass** der Heißluftschrumpf der Fasern kleiner als 2,3 % ist.

3. Schlauch nach Anspruch 1 oder 2, **dadurch gekennzeichnet, dass** der Heißluftschrumpf der Fasern kleiner als 2,1 % ist.

4. Schlauch nach einem oder mehreren der Ansprüche 1 bis 3, **dadurch gekennzeichnet, dass** die Fasern der textilen Verstärkung mit Haftungsverbesserern behandelt sind und dass die Fasern vor der Behandlung mit Haftungsverbesserern einen Heißluftschrumpf entprechend der Ansprüche 1 bis 3 aufweisen.

5. Schlauch nach einem oder mehreren der Ansprüche 1 bis 3, **dadurch gekennzeichnet, dass** die Fasern der textilen Verstärkung frei von Haftungsverbesserern sind.

6. Verwendung eines Schlauches nach einem oder mehreren der Ansprüche 1 bis 5 als Kühlmittelschlauch.

7. Verfahren zur Herstellung eines Schlauches mit einer textilen Verstärkung umfassend die Schritte Extrusion eines Schlauches aus einem elastomeren Material, Aufbringen der textilen Verstärkung auf den äußeren Umfang des extrudierten Schlauches, wobei die textile Verstärkung im wesentlichen aus Fasern besteht, die aus der Gruppe der aliphatischen Polyamide ausgewählt sind, Extrusion eines Überzuges aus einem elastomeren Material auf die textile Verstärkung und anschließende Vulkanisation des erhaltenen Schlauches, **dadurch gekennzeichnet, dass** als textile Verstärkung Fasern mit einem Heißluftschrumpf kleiner als 2,5 % ausgewählt werden, wobei der Heißluftschrumpf nach DIN 53866 bei 180°C, 2 min und einer Vorspannung von 5 mN/tex zu bestimmen ist.

8. Verfahren nach Anspruch 7, **dadurch gekennzeichnet, dass** als textile Verstärkung Fasern mit einem Heißluftschrumpf kleiner als 2,3 % ausgewählt werden, wobei der Heißluftschrumpf nach DIN 53866 bei 180°C, 2 min und einer Vorspannung von 5 mN/tex zu bestimmen ist.

9. Verfahren nach Anspruch 7 oder 8, **dadurch gekennzeichnet, dass** als textile Verstärkung Fasern mit einem Heißluftschrumpf kleiner als 2,1 % ausgewählt werden, wobei der Heißluftschrumpf nach DIN 53866 bei 180°C, 2 min und einer Vorspannung von 5 mN/tex zu bestimmen ist.

## Claims

1. A tube comprising an elastomeric material and a textile reinforcement, wherein the textile reinforcement essentially consists of fibers selected from the group of aliphatic polyamides, **characterized in that** the hot-air shrinkage of the fibers used is less than 2.5%, determined according to DIN 53866 at 180°C, 2 min, and at a pretension of 5 mN/tex.

2. The tube according to Claim 1, **characterized in that** the hot-air shrinkage of the fibers is less than 2.3%.

3. The tube according to Claim 1 or 2, **characterized in that** the hot-air shrinkage of the fibers is less than 2.1 %

4. The tube according to one or more of Claims 1 to 3, **characterized in that** the fibers of the textile reinforcement are treated with adhesion improvers and that the fibers have a hot-air shrinkage according to Claims 1 to 3 prior to the treatment with adhesion improvers.

5. The tube according to one or more of Claims 1 to 3, **characterized in that** the fibers of the textile reinforcement are free of adhesion improvers.

6. Use of a tube according to one or more of Claims 1 to 5 as a coolant tube.

7. Method for producing a tube with a textile reinforcement comprising the steps of extruding a tube from an elastomeric material, applying the textile reinforcement on the outer circumference of the extruded tube, wherein the textile reinforcement essentially consists of fibers which are selected from the group of aliphatic polyamides, extruding a coating from an elastomeric material onto the textile reinforcement, and finally vulcanizing the tube obtained, **characterized in that** fibers are selected for the textile reinforcement with a hot-air shrinkage of less than 2.5%, wherein the hot-air shrinkage is to be determined according to DIN 53866 at 180°C, 2 min, and at a pretension of 5 mN/tex.

8. The method according to Claim 7, **characterized in that** fibers with a hot-air shrinkage of less than 2.3% are selected for the textile reinforcement, wherein the hot-air shrinkage is to be determined according to DIN 53866 at 180°C, 2 min, and at a pretension of 5 mN/tex.

9. The method according to Claim 7 or 8, **characterized in that** fibers with a hot-air shrinkage of less than 2.1 % are selected for the textile reinforcement, wherein the hot-air shrinkage is to be determined according to DIN 53866 at 180°C, 2 min, and at a pretension of 5 mN/tex.

## Revendications

1. Tuyau comprenant un matériau élastomère et un renfort textile, lequel renfort textile est essentiellement constitué de fibres choisies dans l'ensemble des polyamides aliphatiques, **caractérisé en ce que** le retrait dans l'air chaud des fibres utilisées, mesuré, selon la norme DIN 53866, au bout de 2 minutes à 180 °C et sous une pré-tension de 5 mN/tex, est inférieur à 2,5 %.

2. Tuyau conforme à la revendication 1, **caractérisé en ce que** le retrait dans l'air chaud des fibres est inférieur à 2,3 %.

3. Tuyau conforme à la revendication 1 ou 2, **caractérisé en ce que** le retrait dans l'air chaud des fibres est inférieur à 2,1 %.

4. Tuyau conforme à l'une ou plusieurs des revendications 1 à 3, **caractérisé en ce que** les fibres du renfort textile ont été traitées avec un agent améliorant l'adhérence et **en ce que** les fibres présentaient, avant d'être traitées avec un agent améliorant l'adhérence, un retrait dans l'air chaud de valeur indiquée dans les revendications 1 à 3.

5. Tuyau conforme à l'une ou plusieurs des revendications 1 à 3, **caractérisé en ce que** les fibres du renfort textile sont exemptes d'agent améliorant l'adhérence.

6. Utilisation d'un tuyau conforme à l'une ou plusieurs des revendications 1 à 5 en tant que tuyau pour liquide de refroidissement.

7. Procédé de fabrication d'un tuyau doté d'un renfort textile, comportant les étapes consistant à former par extrusion un tuyau en un matériau élastomère, à disposer un renfort textile sur la surface externe de ce tuyau formé par extrusion, lequel renfort textile est essentiellement constitué de fibres choisies dans l'ensemble des polyamides aliphatiques, à former par extrusion, par-dessus le renfort textile, un revêtement de matériau élastomère, et à vulcaniser ensuite le tuyau ainsi obtenu, **caractérisé en ce que** l'on choisit, en tant que renfort textile, des fibres dont le retrait dans l'air chaud est inférieur à 2,5 %, ce retrait dans l'air chaud étant mesuré, selon la norme DIN 53866, au bout de 2 minutes à 180 °C et sous une pré-tension de 5 mN/tex.

8. Procédé conforme à la revendication 7, **caractérisé en ce que** l'on choisit, en tant que renfort textile, des fibres dont le retrait dans l'air chaud est inférieur à 2,3 %, ce retrait dans l'air chaud étant mesuré, selon la norme DIN 53866, au bout de 2 minutes à 180 °C et sous une pré-tension de 5 mN/tex.

9. Procédé conforme à la revendication 7 ou 8, **caractérisé en ce que** l'on choisit, en tant que renfort textile, des fibres dont le retrait dans l'air chaud est inférieur à 2,1 %, ce retrait dans l'air chaud étant mesuré, selon la norme DIN 53866, au bout de 2 minutes à 180 °C et sous une pré-tension de 5 mN/tex.
